# EUROPEAN PATENT APPLICATION

(11) **EP 4 277 149 A1**
(43) Date of publication of application: **15.11.2023**
(21) Application number: 21923696.5
(22) Date of filing: 03.02.2021
(51) Int. Cl.: H04B 7/0456

(54) **PRECODING METHOD AND APPARATUS**

(71) Applicant: Huawei Technologies Co., Ltd., Shenzhen, Guangdong 518129 (CN)
(72) Inventor: WANG, Xiaohan, Shenzhen, Guangdong 518129 (CN); JIN, Huangping, Shenzhen, Guangdong 518129 (CN); HANG, Haicun, Shenzhen, Guangdong 518129 (CN)
(74) Representative: Maiwald GmbH
(86) International application number: PCT/CN2021/075064
(87) International publication number: WO 2022/165668

(57) **Abstract**

This application provides a precoding method and apparatus, to improve precision of an uplink precoding matrix. The method includes: receiving a plurality of precoded downlink reference signals (201); and measuring the plurality of downlink reference signals and determining an uplink precoding vector corresponding to an uplink data stream (203). According to this application, a plurality of downlink reference signals can be measured and processed, so that a terminal device can more precisely obtain, based on measurement results, an uplink precoding vector corresponding to an uplink data stream, thereby improving precision of the uplink precoding vector. This can reduce signal interference between multiple users, and improve signal quality.

## Description

### TECHNICAL FIELD

This application relates to the field of wireless communications, and more specifically, to a precoding method and apparatus.

### BACKGROUND

In massive multiple-input multiple-output (Massive Multiple-Input Multiple-Output, Massive MIMO) technologies, interference between multiple users and interference between multiple signal flows of a same user may be reduced through precoding. This helps improve signal quality, implement spatial multiplexing, and improve spectrum utilization.

In a current communication system, a base station performs channel estimation on an uplink channel based on the sounding reference signal (Sounding Reference Signal, SRS) sent by user equipment (User Equipment, UE), and calculates an uplink precoding matrix of the UE. An index of a codebook is indicated to the LTE via downlink control information (Downlink control information, DCI), allowing the LTE to perform uplink precoding based on the uplink precoding matrix.

However, in the foregoing manner, the uplink precoding matrix cannot be accurately indicated, resulting in high interference between signals received by the LTE. Therefore, how to improve precision of the uplink precoding matrix remains a problem to be resolved.

### SUMMARY

This application provides a precoding method and apparatus, to improve precision of an uplink precoding matrix.

According to a first aspect, a precoding method is provided. The method includes: receiving a plurality of precoded downlink reference signals; measuring the plurality of downlink reference signals and determining an uplink precoding vector corresponding to an uplink data stream.

By measuring the plurality of downlink reference signals, a terminal device can more precisely obtain, based on measurement results, the uplink precoding vector corresponding to the uplink data stream, thereby improving precision of the uplink precoding vector. This can reduce signal interference between multiple users, and improve signal quality.

With reference to the first aspect, in some implementations of the first aspect, the measuring the plurality of downlink reference signals and determining an uplink precoding vector corresponding to an uplink data stream includes: measuring each of the plurality of downlink reference signals and determining an uplink precoding vector corresponding to each downlink reference signal; and determining the uplink precoding vector based on the uplink precoding vectors corresponding to the plurality of downlink reference signals.

With reference to the first aspect, in some implementations of the first aspect, the measuring each of the plurality of downlink reference signals and determining an uplink precoding vector corresponding to each downlink reference signal includes: measuring each downlink reference signal, and obtaining an equivalent downlink channel matrix corresponding to each downlink reference signal; and determining, based on the equivalent downlink channel matrix corresponding to each downlink reference signal, the uplink precoding vector corresponding to each downlink reference signal.

With reference to the first aspect, in some implementations of the first aspect, the uplink precoding vector corresponding to the downlink reference signal is equal to the equivalent downlink channel matrix or a normalized equivalent downlink channel matrix.

With reference to the first aspect, in some implementations of the first aspect, the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

With reference to the first aspect, in some implementations of the first aspect, the method further includes: precoding the uplink data stream based on the uplink precoding vector.

With reference to the first aspect, in some implementations of the first aspect, the precoding the uplink data stream based on the uplink precoding vector includes: processing the uplink precoding vector; and precoding the uplink data stream based on the processed uplink precoding vector.

With reference to the first aspect, in some implementations of the first aspect, the precoding the uplink data stream based on the uplink precoding vector includes: precoding the uplink data stream by using the uplink precoding vector.

With reference to the first aspect, in some implementations of the first aspect, each of the plurality of downlink reference signals is precoded by using one downlink precoding vector, and the downlink precoding vector is determined by measuring an uplink reference signal.

By measuring the plurality of downlink reference signals, a terminal device can more precisely obtain, based on measurement results, the uplink precoding vector corresponding to the uplink data stream, thereby improving precision of the uplink precoding vector. This can reduce signal interference between multiple users, and improve signal quality. For example, when a signal-to-noise ratio of a downlink reference signal received by the terminal device is low, the terminal device may process the plurality of downlink reference signals, and process uplink precoding vectors corresponding to the plurality of downlink reference signals into an uplink precoding vector corresponding to an uplink data stream, so that noise and interference between the plurality of downlink reference signals corresponding to the uplink data stream can be mutually offset to some extent, thus improving the signal-to-noise ratio of the downlink reference signal received by the terminal device. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

According to a second aspect, a precoding method is provided. The method includes: receiving downlink control information, where the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine the precoding vector corresponding to the uplink data stream, and the precoding vector is used to precode the uplink data stream; and determining, based on the quantity of repetitions, the quantity of upstream data streams, and a preset rule, a plurality of downlink reference signals corresponding to each of at least one upstream data stream.

A terminal device determines, based on the quantity of uplink data streams, the preset rule, and the quantity of repetitions, the downlink reference signals corresponding to each of the plurality of uplink data streams. In this way, the terminal device may determine, based on the downlink reference signal, the precoding vector corresponding to the uplink data stream, to precode the uplink data stream. In this case, when a signal-to-noise ratio of the downlink reference signal received by the terminal device is low, noise and interference between a plurality of downlink reference signals corresponding to each uplink data stream can be mutually offset to some extent by processing the plurality of downlink reference signals corresponding to each uplink data stream, thus improving the signal-to-noise ratio of the downlink reference signals received by the terminal device. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

According to a third aspect, a precoding method is provided. The method includes: A terminal device determines downlink reference signals of at least two ports associated with a target data stream; and the terminal device determines an uplink precoding vector of the target data stream based on the downlink reference signals of the at least two ports.

With reference to the third aspect, in some implementations of the third aspect, that a terminal device determines downlink reference signals of at least two ports associated with the target data stream includes: The terminal device determines downlink reference signals of a plurality of ports corresponding to a plurality of data streams, where the plurality of data streams include the target data stream; and the terminal device determines, from the downlink reference signals of the plurality of ports corresponding to the plurality of data streams, the downlink reference signals of the at least two ports associated with the target data stream.

With reference to the third aspect, in some implementations of the third aspect, that a terminal device determines downlink reference signals of at least two ports associated with the target data stream includes: The terminal device obtains ranks of the plurality of data streams, where the ranks of the plurality of data streams indicate a quantity of the plurality of data streams; the terminal device obtains a quantity of repetitions, where the quantity of repetitions indicates a quantity of repetitions of each of the plurality of data streams; the terminal device obtains a repetition mode, where the repetition mode includes a relationship between each of the plurality of data streams and the port of a downlink reference signal corresponding to each data stream; and the terminal device determines, based on the ranks of the plurality of data streams, the repetition mode, and the quantity of repetitions, the downlink reference signals of the at least two ports associated with the target data stream.

With reference to the third aspect, in some implementations of the third aspect, that a terminal device determines, based on the ranks of the plurality of data streams, the repetition mode, and the quantity of repetitions, the downlink reference signals of at least two ports associated with the target data stream includes: The terminal device determines a relationship between the target data stream and the port based on the ranks of the plurality of data streams and the repetition mode; the terminal device determines, based on the relationship and the quantity of repetitions, the port corresponding to the target data stream; and the terminal device receives the downlink reference signals of the target data stream on the port associated with the target data stream, where the quantity of downlink reference signals is the same as the quantity of repetitions.

With reference to the third aspect, in some implementations of the third aspect, that a terminal device obtains a repetition mode includes: The terminal device receives indication information, where the indication information includes the repetition mode.

With reference to the third aspect, in some implementations of the third aspect, that a terminal device obtains a repetition mode includes: The terminal device obtains the repetition mode based on preconfiguration information.

With reference to the third aspect, in some implementations of the third aspect, that a terminal device obtains ranks of a plurality of data streams includes: The terminal device receives first downlink control information (downlink control information, DCI), where the first DCI includes the ranks of the plurality of data streams.

With reference to the third aspect, in some implementations of the third aspect, that a terminal device obtains a quantity of repetitions includes: The terminal device receives second DCI, where the second DCI includes the quantity of repetitions.

With reference to the third aspect, in some implementations of the third aspect, that a terminal device obtains a quantity of repetitions includes: The terminal device obtains a quantity of ports; and the terminal device determines the quantity of repetitions based on the quantity of ports and the ranks of the plurality of data streams.

With reference to the third aspect, in some implementations of the third aspect, that a terminal device determines the quantity of repetitions based on the quantity of ports and the ranks of the plurality of data streams includes: The terminal device determines the quantity of repetitions by dividing the quantity of ports by the ranks of the plurality of data streams and rounding down.

With reference to the third aspect, in some implementations of the third aspect, that a terminal device obtains a quantity of ports includes: The terminal device receives a signaling message, where the signaling message includes the quantity of ports.

With reference to the third aspect, in some implementations of the third aspect, the downlink reference signal includes a channel state information-reference signal (CSI-RS).

The terminal device determines, based on the quantity of uplink data streams, the preset rule, and the quantity of repetitions, the downlink reference signal corresponding to each of the plurality of uplink data streams. In this way, the terminal device may determine, based on the downlink reference signal, a precoding vector corresponding to the uplink data stream, to precode the uplink data stream. In this case, when a signal-to-noise ratio of the downlink reference signal received by the terminal device is low, noise and interference between a plurality of downlink reference signals corresponding to each uplink data stream can be mutually offset to some extent by processing the plurality of downlink reference signals corresponding to each uplink data stream, thus improving the signal-to-noise ratio of the downlink reference signals received by the terminal device. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

According to a fourth aspect, a precoding method is provided. The method includes: precoding a plurality of downlink reference signals; and sending the plurality of precoded downlink reference signals, where measurement results of the plurality of precoded downlink reference signals are used to determine an uplink precoding vector corresponding to an uplink data stream.

With reference to the fourth aspect, in some implementations of the fourth aspect, the uplink precoding vector is determined based on uplink precoding vectors corresponding to the plurality of downlink reference signals, and each uplink precoding vector is determined by measuring each of the plurality of downlink reference signals.

With reference to the fourth aspect, in some implementations of the fourth aspect, the uplink precoding vector corresponding to each downlink reference signal is determined based on an equivalent downlink channel matrix corresponding to each downlink reference signal, and the equivalent downlink channel matrix corresponding to each downlink reference signal is obtained by measuring each downlink reference signal.

With reference to the fourth aspect, in some implementations of the fourth aspect, the uplink precoding vector corresponding to the downlink reference signal is equal to the equivalent downlink channel matrix or a normalized equivalent downlink channel matrix.

With reference to the fourth aspect, in some implementations of the fourth aspect, the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

By separately precoding the plurality of downlink reference signals of a same data stream, the terminal device can obtain the uplink precoding vector corresponding to the uplink data stream more accurately, based on the measurement results of the plurality of downlink reference signals, thereby improving precision of the uplink precoding vector. This can reduce signal interference between multiple users, and improve signal quality. For example, when a signal-to-noise ratio of a downlink reference signal received by the terminal device is low, the terminal device may process the plurality of downlink reference signals, and process uplink precoding vectors corresponding to the plurality of downlink reference signals into the uplink precoding vector corresponding to the uplink data stream, so that noise and interference between the plurality of downlink reference signals corresponding to the uplink data stream can be mutually offset to some extent. In this way, the signal-to-noise ratio of the received downlink reference signal can be improved. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

According to a fifth aspect, a precoding method is provided. The method includes: generating downlink control information, where the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine a precoding vector corresponding to the uplink data stream, the precoding vector is used to precode the uplink data stream, and the downlink reference signal corresponding to each uplink data stream is determined based on the quantity of repetitions, the quantity of uplink data streams, and a preset rule; and sending the downlink control information.

A network device indicates, via downlink control information, a quantity of repetitions and a quantity of uplink data streams to a terminal device, so that the terminal device can determine, based on the quantity of uplink data streams, the preset rule, and a quantity of repetitions, the downlink reference signal corresponding to each of the plurality of uplink data streams. This enables the terminal device to determine, based on the downlink reference signal, the precoding vector corresponding to the uplink data stream, so as to precode the uplink data stream. In this case, when a signal-to-noise ratio of the downlink reference signal received by the terminal device is low, noise and interference between a plurality of downlink reference signals corresponding to each uplink data stream can be mutually offset to some extent by processing the plurality of downlink reference signals corresponding to each uplink data stream, thus improving the signal-to-noise ratio of the downlink reference signals received by the terminal device. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

According to a sixth aspect, a precoding method is provided. The method includes: A network device sends downlink reference signals of at least two ports associated with a target data stream, where the downlink reference signals of the at least two ports are used to determine an uplink precoding vector of the target data stream.

With reference to the sixth aspect, in some implementations of the sixth aspect, that a network device sends downlink reference signals of at least two ports associated with a target data stream includes: The network device sends downlink reference signals of a plurality of ports associated with a plurality of data streams, where the plurality of data streams include the target data stream, and the downlink reference signals of the plurality of ports associated with the plurality of data streams include the downlink reference signals of the at least two ports associated with the target data stream.

With reference to the sixth aspect, in some implementations of the sixth aspect, that a network device sends downlink reference signals of at least two ports associated with a target data stream includes: The network device sends, based on the ranks, repetition mode, and the repetition quantity of a plurality of data streams, the downlink reference signals of the at least two ports associated with the target data stream.

With reference to the sixth aspect, in some implementations of the sixth aspect, that the network device sends, based on the ranks, repetition modes, and repetition quantity of a plurality of data streams, downlink reference signals of the at least two ports associated with the target data stream includes: The network device determines a relationship between the target data stream and a port based on the ranks of the plurality of data streams and the repetition mode; the network device determines, based on the relationship and the quantity of repetitions, the port corresponding to the target data stream; and the network device sends downlink reference signals of the target data stream on the port corresponding to the target data stream, where the quantity of downlink reference signals is the same as the quantity of repetitions.

With reference to the sixth aspect, in some implementations of the sixth aspect, the method further includes: The network device sends indication information, where the indication information includes the repetition mode.

With reference to the sixth aspect, in some implementations of the sixth aspect, the method further includes: The network device obtains a repetition mode according to preconfiguration information.

With reference to the sixth aspect, in some implementations of the sixth aspect, the method further includes: The network device sends first DCI, where the first DCI includes ranks of the plurality of data streams.

With reference to the sixth aspect, in some implementations of the sixth aspect, the method further includes: The network device sends second DCI, where the second DCI includes the quantity of repetitions.

With reference to the sixth aspect, in some implementations of the sixth aspect, the method further includes: The network device sends a quantity of ports, where the quantity of ports is used to determine the quantity of repetitions.

With reference to the sixth aspect, in some implementations of the sixth aspect, that the network device sends the quantity of ports includes: The network device sends a signaling message, where the signaling message includes the quantity of ports.

With reference to the sixth aspect, in some implementations of the sixth aspect, the downlink reference signal includes a CSI-RS.

The network device sends, on a port corresponding to an uplink data flow, a plurality of downlink reference signals corresponding to the uplink data flow, and sends associated information to the terminal device via DCI, to enable the terminal device to determine, based on the quantity of uplink data streams, a preset rule, and the quantity of repetitions, the downlink reference signal corresponding to each of the plurality of uplink data streams. This enables the terminal device to determine, based on the downlink reference signal, a precoding vector corresponding to the uplink data stream, so as to precode the uplink data stream. In this case, when a signal-to-noise ratio of the downlink reference signal received by the terminal device is low, noise and interference between a plurality of downlink reference signals corresponding to each uplink data stream can be mutually offset to some extent by processing the plurality of downlink reference signals corresponding to each uplink data stream, thus improving the signal-to-noise ratio of the downlink reference signals received by the terminal device. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

According to a seventh aspect, a precoding apparatus is provided. The apparatus includes: a transceiver unit, configured to receive a plurality of precoded downlink reference signals; and a determining unit, configured to measure the plurality of downlink reference signals and determine an uplink precoding vector corresponding to an uplink data stream.

With reference to the seventh aspect, in some implementations of the seventh aspect, that the determining unit is configured to measure the plurality of downlink reference signals, and determine an uplink precoding vector corresponding to an uplink data stream includes: The determining unit is configured to measure each of the plurality of downlink reference signals, and determine an uplink precoding vector corresponding to each downlink reference signal; and determine the uplink precoding vector based on the uplink precoding vectors corresponding to the plurality of downlink reference signals.

With reference to the seventh aspect, in some implementations of the seventh aspect, that the determining unit is configured to measure each of the plurality of downlink reference signals, and determine an uplink precoding vector corresponding to each downlink reference signal includes: The determining unit is configured to measure each downlink reference signal and obtain an equivalent downlink channel matrix corresponding to each downlink reference signal; and determine, based on the equivalent downlink channel matrix corresponding to each downlink reference signal, the uplink precoding vector corresponding to each downlink reference signal.

With reference to the seventh aspect, in some implementations of the seventh aspect, the uplink precoding vector corresponding to the downlink reference signal is equal to the equivalent downlink channel matrix or a normalized equivalent downlink channel matrix.

With reference to the seventh aspect, in some implementations of the seventh aspect, the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

With reference to the seventh aspect, in some implementations of the seventh aspect, the apparatus further includes: a processing unit, configured to precode the uplink data stream based on the uplink precoding vector.

With reference to the seventh aspect, in some implementations of the seventh aspect, that the processing unit is configured to precode the uplink data stream based on the uplink precoding vector includes: The processing unit is configured to process the uplink precoding vector, and precode the uplink data stream based on the processed uplink precoding vector.

With reference to the seventh aspect, in some implementations of the seventh aspect, that the processing unit is configured to precode the uplink data stream based on the uplink precoding vector includes: The processing unit is configured to precode the uplink data stream by using the uplink precoding vector.

With reference to the seventh aspect, in some implementations of the seventh aspect, each of the plurality of downlink reference signals is precoded by using one downlink precoding vector, and the downlink precoding vector is determined by measuring an uplink reference signal.

According to an eighth aspect, a precoding apparatus is provided. The apparatus includes: a transceiver unit, configured to receive downlink control information, where the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine a precoding vector corresponding to the uplink data stream, and the precoding vector is used to precode the uplink data stream; and a determining unit, configured to determine, based on the quantity of repetitions, the quantity of uplink data streams, and a preset rule, a plurality of downlink reference signals corresponding to each of at least one uplink data stream.

According to a ninth aspect, a precoding apparatus is provided. The apparatus includes: a communication unit, configured to determine downlink reference signals of at least two ports corresponding to a target data stream; and a processing unit, configured to determine an uplink precoding vector of the target data stream based on the downlink reference signals of the at least two ports.

With reference to the ninth aspect, in some implementations of the ninth aspect, that the communication unit is configured to determine downlink reference signals of at least two ports corresponding to a target data stream includes: The communication unit is configured to receive downlink reference signals of a plurality of ports corresponding to a plurality of data streams, where the plurality of data streams include the target data stream, and determine, from the downlink reference signals of the plurality of ports corresponding to the plurality of data streams, the downlink reference signals of the at least two ports associated with the target data stream.

With reference to the ninth aspect, in some implementations of the ninth aspect, that the communication unit is configured to determine the downlink reference signals of at least two ports corresponding to a target data stream includes: The communication unit is configured to obtain ranks of a plurality of data streams, where the ranks of the plurality of data streams indicate a quantity of the plurality of data streams; obtain a quantity of repetitions, where the quantity of repetitions indicates a quantity of repetitions of each of the plurality of data streams; obtain a repetition mode, where the repetition mode includes a relationship between each of the plurality of data streams and a port of a downlink reference signal corresponding to each data stream; and determine, based on the ranks of the plurality of data streams, the repetition mode, and the quantity of repetitions, the downlink reference signals of the at least two ports associated with the target data stream.

With reference to the ninth aspect, in some implementations of the ninth aspect, that the communication unit is further configured to determine, based on the ranks of the plurality of data streams, the repetition mode, and the quantity of repetitions, the downlink reference signals of at least two ports associated with the target data stream includes: The communication unit is further configured to determine, based on the ranks of the plurality of data streams and the repetition mode, a relationship between the target data stream and the port; and determine, based on the relationship and the quantity of repetitions, a port corresponding to the target data flow; and receive a downlink reference signal of the target data stream on the port corresponding to the target data stream, where a quantity of downlink reference signals is the same as the quantity of repetitions.

With reference to the ninth aspect, in some implementations of the ninth aspect, that the communication unit is further configured to obtain a repetition mode includes: The communication unit is further configured to receive indication information, where the indication information includes the repetition mode.

With reference to the ninth aspect, in some implementations of the ninth aspect, that the communication unit is further configured to obtain a repetition mode includes: The communication unit is further configured to obtain the repetition mode according to preconfigured information.

With reference to the ninth aspect, in some implementations of the ninth aspect, that the terminal device is configured to obtain ranks of a plurality of data streams includes: The communication unit is configured to receive first downlink control information (downlink control information, DCI), where the first DCI includes the ranks of the plurality of data streams.

With reference to the ninth aspect, in some implementations of the ninth aspect, that the terminal device obtains a quantity of repetitions includes: The terminal device obtains second DCI, where the second DCI includes the quantity of repetitions.

With reference to the ninth aspect, in some implementations of the ninth aspect, that the communication unit is further configured to obtain a quantity of repetitions includes: The communication unit is further configured to obtain a quantity of ports, and determine the quantity of repetitions based on the quantity of ports and the ranks of the plurality of data streams.

With reference to the ninth aspect, in some implementations of the ninth aspect, that the communication unit is further configured to determine the quantity of repetitions based on the quantity of ports and the ranks of the plurality of data streams includes: The communication unit is further configured to determine the quantity of repetitions by dividing the quantity of ports by the ranks of the plurality of data streams and rounding down.

With reference to the ninth aspect, in some implementations of the ninth aspect, that the communication unit is further configured to obtain the quantity of ports includes: The communication unit is further configured to receive a signaling message, where the signaling message includes the quantity of ports.

With reference to the ninth aspect, in some implementations of the ninth aspect, the downlink reference signal includes a CSI-RS.

According to a tenth aspect, a precoding apparatus is provided. The apparatus includes: a processing unit, configured to precode a plurality of downlink reference signals; and a transceiver unit, configured to send the plurality of precoded downlink reference signals, where measurement results of the plurality of precoded downlink reference signals are used to determine an uplink precoding vector corresponding to an uplink data stream.

With reference to the tenth aspect, in some implementations of the tenth aspect, the uplink precoding vector is determined based on uplink precoding vectors corresponding to the plurality of downlink reference signals, and each uplink precoding vector is determined by measuring each of the plurality of downlink reference signals.

With reference to the tenth aspect, in some implementations of the tenth aspect, the uplink precoding vector corresponding to each downlink reference signal is determined based on an equivalent downlink channel matrix corresponding to each downlink reference signal, and the equivalent downlink channel matrix corresponding to each downlink reference signal is obtained by measuring each downlink reference signal.

With reference to the tenth aspect, in some implementations of the tenth aspect, the uplink precoding vector corresponding to the downlink reference signal is equal to the equivalent downlink channel matrix or a normalized equivalent downlink channel matrix.

With reference to the tenth aspect, in some implementations of the tenth aspect, the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

According to an eleventh aspect, a precoding apparatus is provided. The apparatus includes: a processing unit, configured to generate downlink control information, where the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine a precoding vector corresponding to the uplink data stream, the precoding vector is used to precode the uplink data stream, and the downlink reference signal corresponding to each uplink data stream is determined based on the quantity of repetitions, the quantity of uplink data streams, and a preset rule; and a transceiver unit, configured to send the downlink control information.

According to a twelfth aspect, a precoding apparatus is provided. The apparatus includes: a sending unit, configured to send downlink reference signals of at least two ports associated with a target data stream, where the downlink reference signals of the at least two ports are used to determine an uplink precoding vector of the target data stream.

With reference to the twelfth aspect, in some implementations of the twelfth aspect, that the sending unit is configured to send downlink reference signals of at least two ports associated with the target data stream includes: The sending unit is configured to send downlink reference signals of a plurality of ports corresponding to a plurality of data streams, where the plurality of data streams include the target data stream, and the downlink reference signals of the plurality of ports corresponding to the plurality of data streams include downlink reference signals of the at least two ports associated with the target data stream.

With reference to the twelfth aspect, in some implementations of the twelfth aspect, that the sending unit is configured to send downlink reference signals of at least two ports associated with a target data stream includes: The sending unit is configured to send, based on the ranks, the repetition mode, and the quantity of repetitions of a plurality of data streams, the downlink reference signals of the at least two ports associated with the target data stream.

With reference to the twelfth aspect, in some implementations of the twelfth aspect, that the sending unit is configured to send, based on the rank quantity, the repetition mode, and the repetition quantity of a plurality of data streams, the downlink reference signals of the at least two ports associated with the target data stream includes: The sending unit is configured to determine a relationship between the target data stream and the port based on the ranks of the plurality of data streams and the repetition mode; determine, based on the relationship and the quantity of repetitions, a port corresponding to the target data stream; and send a downlink reference signal of the target data stream on the port associated with the target data stream, where a quantity of downlink reference signals is the same as the quantity of repetitions.

With reference to the twelfth aspect, in some implementations of the twelfth aspect, the sending unit is further configured to send indication information, where the indication information includes the repetition mode.

With reference to the twelfth aspect, in some implementations of the twelfth aspect, the sending unit is further configured to obtain the repetition mode based on preconfiguration information.

With reference to the twelfth aspect, in some implementations of the twelfth aspect, the sending unit is further configured to send first DCI, where the first DCI includes ranks of the plurality of data streams.

With reference to the twelfth aspect, in some implementations of the twelfth aspect, the sending unit is further configured to send second DCI, where the second DCI includes the quantity of repetitions.

With reference to the twelfth aspect, in some implementations of the twelfth aspect, the sending unit is further configured to send a quantity of ports, where the quantity of ports is used to determine the quantity of repetitions.

With reference to the twelfth aspect, in some implementations of the twelfth aspect, that the sending unit is further configured to send the quantity of ports includes: The sending unit is further configured to send a signaling message, where the signaling message includes the quantity of ports.

With reference to the twelfth aspect, in some implementations of the twelfth aspect, the downlink reference signal includes a CSI-RS.

According to a thirteenth aspect, a communication apparatus is provided. The communication apparatus includes: a memory, configured to store computer programs; a processor, configured to execute some or all the computer programs stored in the memory, so that the device executes the method described in any one of the first aspect to the third aspect, or executes the method described in any one of the fourth aspect to the sixth aspect.

According to a fourteenth aspect, a computer readable storage medium is provided, including: computer programs. When some or all the computer programs run on a computer, the computer is enabled to execute the method described in any one of the first aspect to the third aspect, or to execute the method described in any one of the fourth aspect to the sixth aspect.

According to a fifteenth aspect, a computer program product is provided, including computer programs. When the computer programs run on a computer, the computer is enabled to execute the method described in any one of the first aspect to the third aspect, or to execute the method described in any one of the fourth aspect to the sixth aspect.

According to a sixteenth aspect, a communication system is provided, including the communication apparatus as described in any one of the seventh aspect to the ninth aspect and the communication apparatus as described in any one of the tenth aspect to the twelfth aspect.

### BRIEF DESCRIPTION OF DRAWINGS

FIG. 1 is a schematic diagram of a system architecture to which an embodiment of this application are applicable;
FIG. 2 is a schematic flowchart of a precoding method according to an embodiment of this application;
FIG. 3 is a schematic flowchart of another precoding method according to an embodiment of this application;
FIG. 4 is a schematic block diagram of a precoding apparatus according to an embodiment of this application;
FIG. 5 is a schematic block diagram of another precoding apparatus according to an embodiment of this application;
FIG. 6 is a schematic structural diagram of a terminal device according to an embodiment of this application; and
FIG. 7 is a schematic structural diagram of a network device according to an embodiment of this application.

### DESCRIPTION OF EMBODIMENTS

The following describes the technical solutions of this application with reference to the drawings.

The technical solutions in embodiments of this application may be applied to various communication systems, for example, a long term evolution (Long Term Evolution, LTE) system, an LTE frequency division duplex (Frequency division duplex, FDD) system, an LTE time division duplex (Time division duplex, TDD) system, a universal mobile telecommunications system (Universal mobile telecommunications system, UMTS), a worldwide interoperability for microwave access (Worldwide interoperability for microwave access, WiMAX) communication system, a 5th Generation (5th Generation, 5G) mobile communication system or a new radio access technology (New Radio Access Technology, NR), or a next-generation communication system such as 6G. The 5G mobile communication system may be non-standalone (Non-standalone, NSA) or standalone (Standalone, SA).

The technical solutions provided in this application may be further applied to machine type communication (Machine type communication, MTC), long term evolution-machine (Long Term Evolution-machine, LTE-M), and a device-to-device (Device-to-device, D2D) network, a machine to machine (Machine to machine, M2M) network, an internet of things (Internet of things, IoT) network, or other networks. The IoT network may include, for example, an internet of vehicles. Communication manners in the internet of vehicles system are collectively referred to as vehicle-to-x (Vehicle To X, V2X, X can stand for anything). For example, V2X may include: vehicle to vehicle (Vehicle to vehicle, V2V) communication, vehicle to infrastructure (Vehicle to infrastructure, V2I) communication, vehicle to pedestrian (Vehicle to pedestrian, V2P) communication, or vehicle to network (Vehicle to network, V2N) communication.

The technical solutions provided in this application may be further applied to a future communication system, for example, a 6th generation (6th Generation, 6G) mobile communication system. This is not limited in this application.

In embodiments of this application, a network device may be any device with a wireless transceiver function. The device includes, but is not limited to: an evolved NodeB (Evolved NodeB, eNB), a radio network controller (Radio network controller, RNC), a NodeB (NodeB, NB), a base station controller (Base station controller, BSC), a base transceiver station (Base transceiver station, BTS), a home base station (for example, home evolved NodeB, or home NodeB, HNB), a baseband unit (Baseband unit, BBU), an access point (Access point, AP), a wireless relay node, a wireless backhaul node, a transmission point (Transmission point, TP) in a wireless fidelity (Wireless fidelity, Wi-Fi) system, or a transmission and reception point (Transmission and reception point, TRP), or the like. Alternatively, the device may be a gNB or a transmission point (Transmission point, TRP or TP) in a 5G (for example, NR) system, one or one group of antenna panels (including a plurality of antenna panels) in a 5G base station; or it may be a network node that constitutes a gNB or a transmission point, for example, a baseband unit (Baseband unit, BBU), or a distributed unit (Distributed unit, DU), or a base station in a next-generation 6G communication system.

In some deployments, the gNB may include a central unit (Centralized unit, CU) and a DU. The gNB may further include an active antenna unit (active antenna unit, AAU). The CU implements some functions of the gNB, and the DU implements some functions of the gNB. For example, the CU is responsible for processing non-real-time protocols and services, and implementing functions of a radio resource control (Radio resource control, RRC) layer and a packet data convergence protocol (Packet data convergence protocol, PDCP) layer. The DU is responsible for processing physical layer protocols and real-time services, and implementing functions of a radio link control (Radio link control, RLC) layer, a medium access control (Medium access control, MAC) layer, and a physical (Physical, PHY) layer. The AAU performs some physical layer processing functions, RF processing functions, and functions related to active antennas. The information at the RRC layer is finally changed into the information at the PHY layer, or is changed from the information at the PHY layer. Therefore, in this architecture, the higher layer signaling such as the RRC layer signaling may also be considered to be sent by the DU, or by the DU and the CU. It may be understood that a network device may include one or more of a CU node, a DU node, and an AAU node. In addition, the CU may be considered as a network device that constitutes a radio access network (Radio access network, RAN), or be considered as a network device that constitutes a core network (Core network, CN). This is not limited in this application.

A network device serves a cell, where terminal devices use transmission resources allocated by the network device (for example, a frequency domain resource, or a spectrum resource) to communicate with the cell. The cell may be part of a macro base station (for example, a macro eNB or a macro gNB), or may be part of a base station corresponding to a small cell (Small cell). The small cell herein may include: a metro cell (Metro cell), a micro cell (Micro cell), a pico cell (Pico cell), and a femto cell (Femto cell). These small cells are characterized by small coverage and low transmit power, and are applicable to providing high-speed data transmission services.

In embodiments of this application, a terminal device may also be referred to as a user equipment (User Equipment, LTE), an access terminal, a subscriber unit, a subscriber station, a mobile station, a mobile station, a remote station, a remote terminal, a mobile device, a user terminal, a terminal, a wireless communication device, a user agent, or a user apparatus.

The terminal device may be a device that provides voice/data connectivity for users, for example, a handheld device or an in-vehicle device with a wireless connection function. Current examples of some terminals may be: a mobile phone (Mobile phone), a tablet computer (Tablet computer), a computer with a wireless transceiver function (such as a notebook computer or a palmtop computer), a mobile internet device (Mobile Internet device, MID), a virtual reality (Virtual reality, VR) device, and an augmented reality (Augmented reality, AR) device, a wireless terminal in industrial control (Industrial control), a wireless terminal for self-driving (Self-driving), a wireless terminal for remote medical (Remote medical), a wireless terminal in smart grid (Smart grid), and a wireless terminal for transportation safety (Transportation safety), a wireless terminal in a smart city (Smart city), a wireless terminal in a smart home (Smart home), a cellular phone, a cordless phone, a session initiation protocol (Session initiation protocol, SIP) phone, a wireless local loop (Wireless local loop, WLL) stations, a personal digital assistant (Personal digital assistant, PDA), a handheld device with wireless communication capabilities, a computing device or other processing devices connected to wireless modems, an in-vehicle device, a wearable device, a terminal device in a 5G network, or a terminal device in a future evolved public land mobile network (Public land mobile network, PLMN).

A wearable device may also be referred to as a wearable intelligent device, which is a generic term for daily wearable devices, such as glasses, gloves, watches, clothes, and shoes, that are developed by using intelligent technologies. Wearable devices are portable devices that can be directly worn on the body or integrated into clothes or accessories of users. Wearable devices are more than hardware devices. Supported by software, data exchange, and cloud interaction, wearable devices can provide powerful functions. In a broad sense, wearable intelligent devices include full-function, large-size, and complete or partial functions that can be implemented without relying on a smartphone, for example, smart watches or smart glasses, and devices that focus on a specific type of application function, and need to be used with other devices such as smart phones, such as various smart bands and smart jewelry for physical signs monitoring.

In addition, the terminal device may alternatively be a terminal device in an internet of things (Internet of things, IoT) system. IoT is an important part of future information technology development. Its main technical feature is to connect objects to the network through communication technologies, thereby realizing the intelligent network of man-machine interconnection and interconnection between objects. The IoT technology may use, for example, a narrow band (Narrow band, NB) technology to achieve massive connections, in-depth coverage and power saving for terminals.

In addition, terminal devices may further include sensors used in, for example, an intelligent printer, a train detector, and a gas station. Main functions include collecting data (for some terminal devices), receiving control information and downlink data from a network device, sending an electromagnetic wave, and transmitting uplink data to the network device.

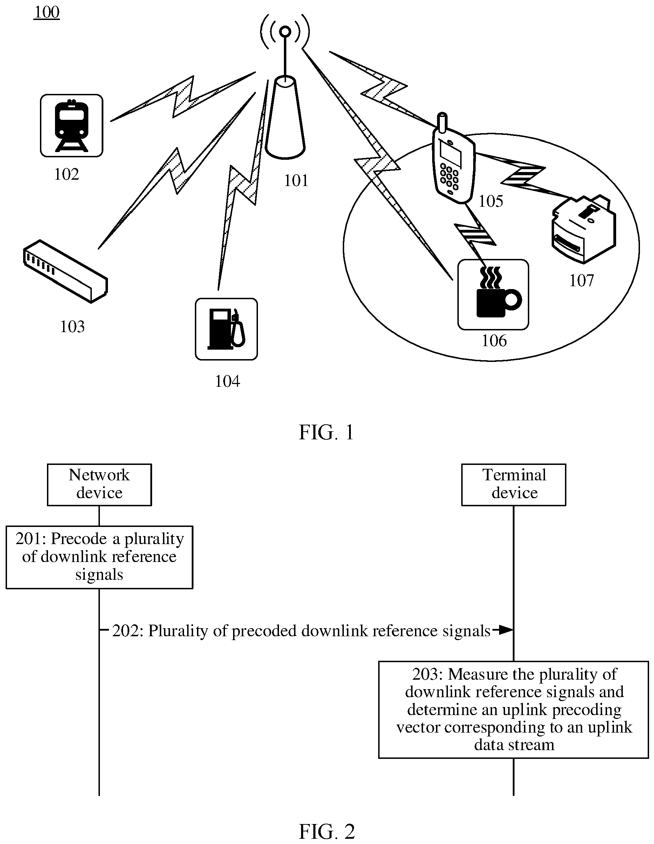

For ease of understanding embodiments of this application, a communication system applicable to the methods provided in embodiments of this application is first described in detail with reference to FIG. 1.

FIG. 1 is a schematic diagram of a communication system 100 applicable to a method according to embodiments of this application. As shown in the figure, the communication system 100 may include at least one network device, such as a network device 101 in the 5G system shown in FIG. 1. The communication system 100 may further include at least one terminal device, such as terminal devices 102 to 107 shown in FIG. 1. The terminal devices 102 to 107 may be mobile or fixed. The network device 101 and one or more of the terminal devices 102 to 107 may communicate with each other through a radio link. Each network device may provide communication coverage for a specific geographical area, and may communicate with a terminal device located in the covered area. For example, the network device may send configuration information to a terminal device, and the terminal device may send uplink data to the network device based on the configuration information. For another example, the network device may send downlink data to the terminal device. Therefore, the network device 101 and the terminal devices 102 to 107 in FIG. 1 form the communication system.

Alternatively, terminal devices can communicate with each other directly. Direct communication between terminal devices may be implemented by using, for example, a D2D technology. As shown in the figure, the terminal devices 105 and 106 and the terminal devices 105 and 107 may directly communicate with each other by using the D2D technology. The terminal device 106 and the terminal device 107 may separately or simultaneously communicate with the terminal device 105.

Alternatively, the terminal devices 105 to 107 may separately communicate with the network device 101. For example, the terminal device 105 and the terminal device 106 in the figure may directly communicate with the network device 101. Alternatively, the terminal device 107 may indirectly communicate with the network device 101. In the figure, the terminal device 107 communicates with the network device 101 by using the terminal device 106.

It should be understood that FIG. 1 shows an example of a network device and a plurality of terminal devices interconnected via communication links between the communication devices. Alternatively, the communication system 100 may include a plurality of network devices, and a coverage area of each network device may include another quantity of terminal devices, for example, more or fewer terminal devices. This is not limited in embodiments of this application.

A plurality of antennas may be configured for each of the foregoing communication devices, such as the network device 101 and the terminal devices 102 to 107 in FIG. 1. The plurality of antennas may include at least one sending antenna configured to transmit signals and at least one receiving antenna configured to receive signals. In addition, each communication device further includes a transmitter chain and a receiver chain. A person of ordinary skill in the art may understand that each of the transmitter chain and the receiver chain may include a plurality of components related to signal transmission and reception (for example, a processor, a modulator, a multiplexer, a demodulator, a demultiplexer, or an antenna). Therefore, the network devices and the terminal devices may communicate with each other by using a multi-antenna technology.

Alternatively, the wireless communication system 100 may further include other network entities such as a network controller and a mobility management entity. This is not limited in embodiments of this application.

For ease of understanding embodiments of this application, the following briefly describes a processing process at a physical layer before a downlink signal is sent. It should be understood that the process of downlink signal processing described below may be performed by a network device, or may be performed by a component (such as a chip or a chip system) configured in the network device. For ease of description, they are collectively referred to as network devices hereinafter.

The network device may process a code word (Code word) on a physical channel. The code word may be coded bits (for example, including channel coding). The code word is scrambled (Scrambling), and a scrambled bit is generated. Modulation mapping (Modulation mapping) is performed on the scrambled bits to obtain a modulation symbol. After layer mapping (layer mapping), the modulation symbol is mapped to multiple layers (Layers), or referred to as a transport layer. The modulation symbol obtained through layer mapping is precoded (Precoding), to obtain a precoded signal. A precoded signal is mapped to a plurality of REs after resource element (Resource element, RE) mapping. These REs are then transmitted via an antenna port (Antenna port) after orthogonal frequency division multiplexing (Orthogonal frequency division multiplexing, OFDM) modulation.

It should be understood that the process of downlink signal processing described above is merely an example, and should not constitute any limitation on this application. For details about the process of downlink signal processing, refer to conventional technologies. For brevity, detailed description of a specific process thereof is omitted herein.

It should be understood that the method provided in embodiments of this application may be applied to a system in which communication is performed by using multi-antenna technologies, for example, the communication system 100 shown in FIG. 1. The communication system may include at least one network device and at least one terminal device. The network device and the terminal device may communicate with each other by using multi-antenna technologies.

It should be further understood that the method provided in embodiments of this application is not limited to communication between the network device and the terminal device, and may be further applied to communication between terminal devices, and the like. The scenario to which the method is applied is not limited in this application. In an embodiment shown below, interaction between the network device and the terminal device is used as an example to describe in detail the method provided in embodiments of this application, for ease of understanding and description.

It should be further understood that the embodiment shown below do not specifically limit a specific structure of an execution body of the method provided in embodiments of this application, provided that communication can be performed according to the method provided in embodiments of this application, by running a program that records code of the method provided in embodiments of this application, for example: The method provided in embodiments of this application may be executed by a terminal device or a network device, or a functional module that is in the terminal device or the network device and that can invoke a program and execute the program.

For ease of understanding embodiments of this application, the following briefly describes the terms used in embodiments of this application.

(1) Precoding technology: In the case that a channel status is given, a sending device (for example, a network device) may process a to-be-sent signal based on a precoding matrix that matches the channel status, so that a precoded to-be-sent signal adapts to a channel, and a receiving device (for example, a terminal device) eliminates inter-channel impact with less complexity. Therefore, by precoding the signal to be transmitted, the quality of received signals (for example, a signal to interference plus noise ratio, Signal to interference plus noise ratio, SINR) is improved. Therefore, by using a precoding technology, a sending device and a plurality of receiving devices can perform transmission on a same time-frequency resource, that is, a multi-user multiple-input multiple-output (Multiple user multiple input multiple output, MU-MIMO) mode is implemented.

It should be understood that the related description of the precoding technology is merely an example for ease of understanding, and is not intended to limit the protection scope of embodiments of this application. In a specific implementation process, the sending device may alternatively perform precoding in another manner. For example, when channel information (for example, but not limited to a channel matrix) cannot be obtained, precoding is performed by using a preset precoding matrix or by using weighted processing. For brevity, specific content thereof is not described herein.

2. Antenna port (Antenna port): Port for short. The antenna port may be understood as a transmit antenna that can be identified by a receiving device, or as a transmit antenna that can be spatially distinguished. Each antenna port may correspond to one reference signal. Therefore, each antenna port may be referred to as a reference signal port, for example, a channel state information reference signal (Channel state information reference signal, CSI-RS) port, or a sounding reference signal (Sounding reference signal, SRS) port.

3. Precoding matrix (Precoding matrix): A terminal device may determine the precoding matrix based on channel measurement. For example, a terminal device may determine the channel matrix in a manner such as channel estimation or based on channel reciprocity. For example, the precoding matrix may be obtained by performing singular value decomposition (Singular value decomposition, SVD) on a channel matrix or the covariance matrix of a channel matrix. Alternatively, the precoding matrix may be obtained by performing eigenvalue decomposition (Eigenvalue decomposition, EVD) on the covariance matrix of a channel matrix. It should be understood that the foregoing listed manners of determining the precoding matrix are merely examples, and should not constitute any limitation on this application. For a manner of determining the precoding matrix, refer to conventional technologies. For brevity, the precoding matrix is not listed one by one herein.

The precoding matrix determined by the terminal device may be referred to as a to-be-fed precoding matrix, or a to-be-reported precoding matrix. The terminal device may indicate the to-be-fed-back precoding matrix by using a precoding matrix indicator (Precoding matrix indicator, PMI), so that the network device recovers the precoding matrix based on the PMI. The precoding matrix recovered by the network device based on the PMI may be the same as or similar to the to-be-fed-back precoding matrix.

In downlink channel measurement, a higher degree of approximation between the precoding matrix determined by the network device based on the PMI and the precoding matrix determined by the terminal device indicates that the precoding matrix used for data transmission determined by the terminal device is more capable of adapting to the downlink channel. Therefore, signal transmission quality can be improved.

4. Precoding vector: In embodiments of this application, the precoding vector may be determined by a vector in the precoding matrix, for example, a column vector. In other words, the precoding matrix may include one or more column vectors, and each column vector may be used to determine one precoding vector. When the precoding matrix includes only one column vector, the precoding matrix may also be referred to as a precoding vector. The precoding matrix may be determined by using precoding vectors of one or more transport layers, and each vector in the precoding matrix may correspond to one transport layer.

5. Rank (Rank) of an uplink data stream: The rank of the uplink data stream may be a rank (Rank) fed back by the network device based on channel measurement, where the network device may measure the channel based on the uplink reference signal. In embodiments of this application, a rank fed back by the network device based on channel measurement may be equal to a quantity of transport layers, that is, a quantity of uplink data streams.

6. CSI-RS: A CSI-RS is used to measure a channel between a base station and LTE, and obtain channel state information, such as a precoding matrix and channel quality information, that is required for scheduling and link adaptation. The downlink reference signal in embodiments of this application may include a CSI-RS.

For ease of understanding embodiments of this application, the following points are further described.

First, in embodiments of this application, "indicate" may include "directly indicate" and "indirectly indicate". For example, when a piece of indication information is described as indicating information I, the indication information may directly indicate I or indirectly indicate I, but it does not necessarily indicate that the indication information carries I.

The information indicated by the indication information is referred to as the to-be-indicated information. In a specific implementation process, there are many manners of indicating the to-be-indicated information. For example, but not limited to, the to-be-indicated information may be directly indicated, for example, the to-be-indicated information or an index of the to-be-indicated information. Alternatively, to-be-indicated information may be indirectly indicated by indicating other information, where there is an association relationship between the other information and the to-be-indicated information. Alternatively, only a part of the to-be-indicated information may be indicated, and another part of the to-be-indicated information is known or agreed in advance. For example, the indication information indicates six vectors. Therefore, the to-be-indicated information is six vectors. However, only five vectors are actually indicated by using the indication information, and the other vector does not need to be indicated. However, during description, the indication information may still be described as indicating six vectors. In this case, the indication information indicates only a part (five vectors) of the to-be-indicated information (six vectors), and the other part (the remaining one vector) of the to-be-indicated information is known or agreed in advance. For another example, the indication information indicates a weighting coefficient of each vector, but actually, weighting coefficients of only five vectors are indicated by using the indication information, and a weighting coefficient of another vector does not need to be indicated. However, during description, it may still be described as that the indication information indicates a weighting coefficient of each vector. In this case, the indication information indicates only a part (the weighting coefficients of the five vectors) of the to-be-indicated information (the weighting coefficients of the six vectors), and the other part of the to-be-indicated information (the weighting coefficient of the remaining vector) is known or agreed upon in advance. For example, specific information may be indicated by using a pre-agreed (for example, specified in a protocol) arrangement sequence of all pieces of information, so as to reduce indication overheads to some extent. In addition, a common part of each piece of information may be further identified and indicated in a unified manner, so as to reduce indication overheads caused by separately indicating same information. For example, a person skilled in the art should understand that the precoding matrix includes precoding vectors, and all precoding vectors in the precoding matrix may have a same part in terms of composition or other attributes.

In addition, specific indication manners may alternatively be various existing indication manners, for example, but not limited to the foregoing indication manners and various combinations thereof. For specific details of various indication manners, refer to conventional technologies. Details are not described in this specification. It can be learned from the foregoing description that, for example, when a plurality of pieces of information of a same type need to be indicated, different indication manners of different information may occur. In a specific implementation process, a required indication manner may be selected based on a specific requirement. The selected indication manner is not limited in embodiments of this application. In this way, the indication manners in embodiments of this application should be understood as covering various methods that can enable the to-be-indicated party to learn of the to-be-indicated information.

In addition, the to-be-indicated information may have another equivalent form. For example, a row vector may be represented as a column vector, a matrix may be represented by using a transposed matrix of the matrix, or a matrix may be represented in a form of a vector or an array. The vector or array may be formed by connecting row vectors or column vectors of the matrix, and a Kronecker product of the two vectors may also be represented in a form such as a product of a vector and a transposed vector of another vector. The technical solutions provided in embodiments of this application, should be understood as covering various forms. For example, some or all features in embodiments of this application, should be understood as covering various forms of the features.

The to-be-indicated information may be sent together as a whole, or may be divided into multiple pieces of sub-information and sent separately. In addition, the sending periods and/or sending moments of these pieces of sub-information may be the same or different. A specific sending method is not limited in this application. The sending periods and/or sending moments of these pieces of sub-information may be predefined, for example, predefined by a protocol, or may be configured by a transmit end device that sends configuration information to a receive end device. The configuration information may include, for example, but is not limited to, radio resource control signaling, for example, radio resource control (Radio resource control, RRC) signaling, MAC layer signaling, for example, a MAC-information element (Control element, CE), and physical layer signaling, for example, one type of downlink control information (Downlink control information, DCI) or a combination of at least two types.

Second, in embodiments of this application, the precoding vector may be a vector in the precoding matrix, for example, a column vector. The precoding matrix may include one or more transport layer precoding vectors, and each column vector in the precoding matrix may correspond to one transport layer.

Third, terms "first", "second", "third", and "fourth", and various sequence numbers in the following embodiments are merely used for differentiation for ease of description, and are not used to limit the scope of embodiments of this application. For example, for differentiating different indication information.

In the embodiments shown below, "pre-obtaining" may include a signaling that is indicated by a network device or predefined, for example, by a protocol. The "predefinition" may be implemented by pre-storing, in a device (for example, a terminal device and a network device), a corresponding code, or a table; or by another manner that may be used to indicate related information. A specific implementation of the "pre-definition" is not limited in this application.

Fourth, the "protocol" in embodiments of this application, may refer to a standard protocol in the field of communication, for example, including an LTE protocol, an NR protocol, and a related protocol applied to a future communication system. This is not limited in this application.

Fifth, "at least one" refers to one or more, and "a plurality of" refers to two or more. The term "and/or" is used to describe an association relationship between associated objects, indicating that three relationships may exist. For example, "A and/or B" may represent the following three cases: Only A exists, both A and B exist, or only B exists, where A and B may be singular or plural. The character "/" generally indicates that the associated objects are in an OR relationship. At least one of the following items (pieces) or a similar expression thereof refers to any combination of these items, including any combination of singular items (pieces) or plural items (pieces). For example, at least one of a, b, and c may indicate: a, or b, or c, or a and b, or a and c, or b and c, or a, b, and c, where a, b, and c may be singular or plural.

The following details an uplink precoding matrix indication method and apparatus provided in embodiments of this application, with reference to the drawings.

FIG. 2 is a schematic flowchart of a precoding method according to an embodiment of this application.

201. A network device precodes a plurality of downlink reference signals.

Specifically, for example, before step 201, a terminal device may first send an uplink reference signal such as an SRS to the network device. The terminal device may send an uplink reference signal to the network device, or the terminal device may send a plurality of uplink reference signals to the network device on a plurality of antenna ports, or a plurality of terminal devices may send respective corresponding uplink reference signals on a plurality of antenna ports. After receiving the uplink reference signal, the network device measures the uplink reference signal and obtain an uplink channel matrix, and the network device may determine a downlink channel matrix based on channel reciprocity, obtain the downlink precoding vector through calculation, and load the downlink precoding vector to the downlink reference signal for sending.

In other words, the network device precodes the plurality of downlink reference signals, and then may send the precoded downlink reference signals to the terminal device. When the network device needs to send a plurality of downlink reference signals, each downlink reference signal may be obtained by using the foregoing process. In other words, each downlink reference signal may be precoded by using one downlink precoding vector and then sent to the terminal device.

Measurement results of the plurality of precoded downlink reference signals are used to determine an uplink precoding vector corresponding to an uplink data stream. Therefore, it should be understood that the network device (for example, a base station) may design a used precoding vector when precoding each downlink reference signal, so that, after the terminal device performs channel measurement on each precoded downlink reference signal, the obtained equivalent downlink channel matrix may be used to obtain an uplink precoding vector. For example, the uplink precoding vector is equal to an equivalent downlink channel matrix, or is equal to a normalized equivalent downlink channel matrix.

202. The network device sends a plurality of precoded downlink reference signals. Correspondingly, the terminal device receives the plurality of precoded downlink reference signals.

Specifically, the plurality of downlink reference signals sent by the network device are corresponding to a same uplink data stream. Because channels of antenna ports are different, even if downlink reference signals corresponding to the same uplink data stream are sent, the precoded downlink reference signals actually sent by the network device may be different. Therefore, by receiving the plurality of precoded downlink reference signals sent by the network device, the terminal device may process the plurality of downlink reference signals, and obtain the uplink precoding vector corresponding to the uplink data stream.

203. The terminal device measures the plurality of downlink reference signals, and determine an uplink precoding vector corresponding to an uplink data stream.

Specifically, the plurality of downlink reference signals are downlink reference signals corresponding to a same uplink data stream. The terminal device may determine, by measuring the plurality of downlink reference signals corresponding to a same uplink data stream, a precoding vector corresponding to the uplink data stream.

Specifically, the terminal device may measure each of the plurality of downlink reference signals, determine an uplink precoding vector corresponding to each downlink reference signal, and then determine, based on the uplink precoding vectors corresponding to these downlink reference signals, the uplink precoding vector corresponding to the uplink data stream.

The terminal device may determine the uplink precoding vector of each of the plurality of downlink reference signals in a plurality of manners. For example, the terminal device may measure each of the plurality of downlink reference signals, and obtain an equivalent downlink channel matrix corresponding to each downlink reference signal; and determine, based on the equivalent downlink channel matrix, the uplink precoding vector corresponding to each downlink reference signal. The uplink precoding vector corresponding to the downlink reference signal may be equal to the equivalent downlink channel matrix of the downlink reference signal, or equal to the normalized equivalent downlink channel matrix. Therefore, it should be understood that the network device (for example, a base station) may design a used precoding vector when precoding each downlink reference signal, so that, after the terminal device performs channel measurement on each precoded downlink reference signal, the obtained equivalent downlink channel matrix may be used to obtain an uplink precoding vector. For example, the uplink precoding vector is equal to the equivalent downlink channel matrix, or is equal to the normalized equivalent downlink channel matrix.

Alternatively, the terminal device may determine, in a plurality of manners based on the uplink precoding vectors corresponding to the plurality of downlink reference signals, the uplink precoding vector corresponding to the uplink data stream. For example, the terminal device may perform summation on the plurality of uplink precoders corresponding to the plurality of downlink reference signals, and obtain an uplink precoding vector corresponding to an uplink data stream. Alternatively, the terminal device may obtain an average value of a plurality of uplink precoding vectors corresponding to a plurality of downlink reference signals, and use the average value as one uplink precoding vector corresponding to one uplink data stream. The processing of the plurality of uplink precoding vectors corresponding to the plurality of downlink reference signals described in embodiments of this application is merely an example, and is not limited. It should be understood that all methods for processing a plurality of uplink precoding vectors corresponding to a plurality of downlink reference signals into one uplink and coding vector corresponding to one uplink data stream fall within the protection scope of this application.

When the plurality of downlink reference signals received by the terminal device include the downlink reference signals corresponding to the plurality of uplink data streams, the uplink precoding vector corresponding to the uplink data streams may be determined by using a plurality of methods. For example, each downlink reference signal of a same uplink data stream may be measured, and determine an uplink precoding vector corresponding to each downlink reference signal, and then determine the uplink precoding vector corresponding to these downlink reference signals. Alternatively, all downlink reference signals corresponding to all uplink data streams may be measured together, and then an equivalent channel matrix is processed. The equivalent channel matrix may be processed by performing summation on columns corresponding to an uplink data stream, or by performing normalization after summation. Alternatively, a column corresponding to an uplink data flow may be averaged, or normalized after averaged.

Based on step 203, optionally, the terminal device may further precode the uplink data stream based on the uplink precoding vector. Specifically, the uplink precoding vector may be directly used to precode the uplink data stream, or the obtained uplink precoding vector may be processed first, and then the uplink data stream is precoded. The uplink precoding vector may be processed by allocating inter-subband power based on inter-subband power planning, and then precoding the uplink data stream based on the allocated power.

According to the solution provided in embodiments of this application, a plurality of downlink reference signals may be measured, so that the terminal device can obtain, based on measurement results, an uplink precoding vector corresponding to an uplink data stream more accurately, thereby improving precision of the uplink precoding vector. For example, when a signal-to-noise ratio of a downlink reference signal received by the terminal device is low, the terminal device may process the plurality of downlink reference signals, and process uplink precoding vectors corresponding to the plurality of downlink reference signals into an uplink precoding vector corresponding to an uplink data stream, so that noise and interference between the plurality of downlink reference signals corresponding to the uplink data stream can be mutually offset to some extent, thus improving the signal-to-noise ratio of the downlink reference signal received by the terminal device. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

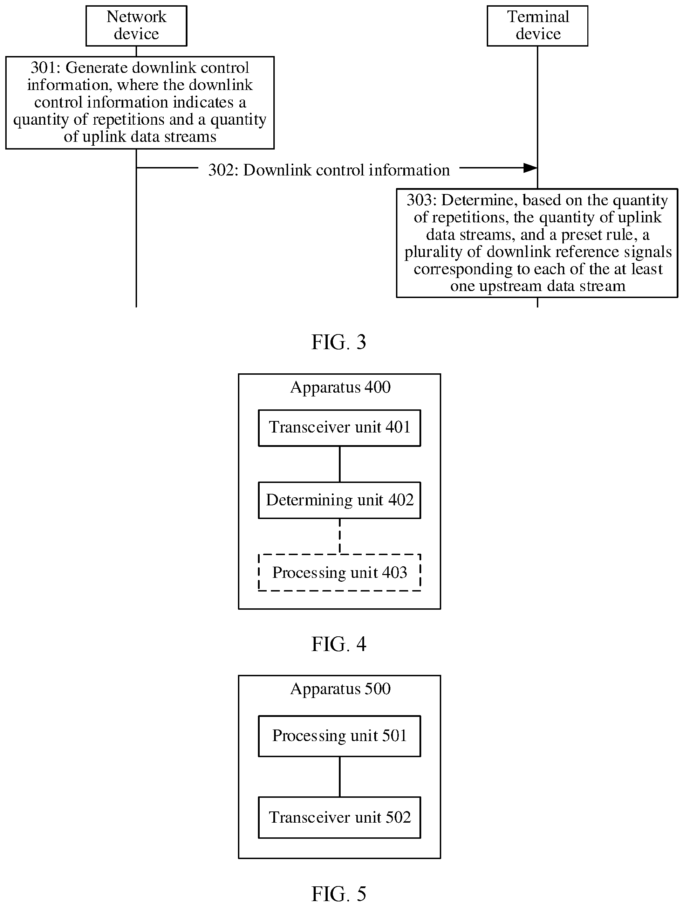

FIG. 3 is a schematic flowchart of another precoding method according to an embodiment of this application.

301. A network device generates downlink control information, where the downlink control information indicates a quantity of repetitions and a quantity of uplink data streams.

Specifically, before step 301, for example, a terminal device may first send an SRS to the network device. The network device measures an uplink channel based on the SRS, and determines, based on a result of the channel measurement, a quantity of uplink data streams and the quantity of repetitions that can be sent by the terminal device. It should be understood that the network device may determine the quantity of uplink data streams and the quantity of repetitions based on the measurement result of measuring the uplink channel by using the SRS, and generate the downlink control information. Alternatively, the network device may determine the quantity of uplink data streams and the quantity of repetitions based on preconfiguration information in the network device, and generate the downlink control information. The manner in which the network device determines the quantity of uplink data streams and the quantity of repetitions is not limited in this application.

In addition, the network device may further determine related information about a port configured for the terminal device. For example, the network device may determine a number and a quantity of ports for sending a downlink reference signal. Specifically, after determining, based on the measurement result of the uplink channel, the quantity of uplink data streams and the quantity of repetitions that can be sent by the terminal device, the network device may multiply the quantity of uplink data streams and the quantity of repetitions to obtain the quantity of ports actually needed by the terminal device. A quantity of ports configured by the network device is usually a value of 2 to the power of k; k is a positive integer, for example, 2, 4, or 8. When the quantity of ports actually required by the terminal device is not exactly a value of 2 to the power of k, the quantity of ports configured by the network device is one of the values of 2 to the power of k which is greater than the quantity of actually occupied ports. For example, when the quantity of ports actually required by the terminal device is 3, the quantity of ports configured by the network device for the terminal device may be 4. If the quantity of uplink data streams is 3, and four ports are configured for these streams, then an equivalent channel may be identified by performing channel estimation on the first three ports, and this equivalent channel may be used to determine the uplink precoding vectors of the three uplink data streams. For another example, when the quantity of uplink data streams is 3 and the quantity of repetitions is 2, the quantity of ports actually used by the terminal device is 6, and the quantity of ports configured by the network device is 8. In this case, the terminal device may receive the downlink reference signals of the three uplink data streams on the first six ports of the eight ports, and perform channel estimation to obtain precoding vectors corresponding to the three uplink data streams. In addition, the network device may configure a quantity of ports for the terminal device by using signaling. Specifically, the network device may configure a specific quantity of ports for the terminal device by using an information element nrofPorts related to the quantity of ports in the RRC signaling. It should be understood that there is an associate relationship between an antenna port and a downlink reference signal resource. For example, the antenna port may be corresponding to an identifier (Identifier, ID) of the downlink reference signal, or may be corresponding to a time-frequency resource location for sending the downlink reference signal. The configuring, by the network device, a port for the terminal device may also be understood as configuring a downlink reference signal resource by the network device for the terminal device.

302. The network device sends downlink control information to the terminal device, and the terminal device receives the downlink control information.

After receiving the downlink control information sent by the network device, the terminal device may obtain the quantity of uplink data streams and the quantity of repetitions. Specifically, the terminal device may directly obtain the quantity of uplink data streams and the quantity of repetitions by using a specific field in the downlink control information. For example, when the downlink control information indicates a quantity of uplink data streams, existing downlink control information may be reused to obtain the quantity of uplink data streams from a transmission precoding matrix indicator (Transport Precoding Matrix Indicator, TPMI). That is, in the TPMI, only a part that indicates a quantity of uplink data streams is valid. Alternatively, a new field is added to the downlink control information to indicate a quantity of uplink data streams. Similarly, existing downlink control information may be reused, or a new field may be added to the downlink control information to indicate a quantity of repetitions.

Alternatively, after receiving the downlink control information, the terminal device may obtain the quantity of uplink data streams and the quantity of repetitions in another manner. Specifically, the actually used port quantity is a product of the quantity of uplink data streams and the quantity of repetitions. Therefore, the terminal device may determine the third parameter based on any two of the quantity of uplink data streams, the quantity of repetitions, and the quantity of ports. It should be understood that the quantity of actually used ports is the quantity of downlink reference signals actually received by the terminal device.

For example, if the terminal device receives the quantity of ports and the quantity of uplink data streams by using a signaling message, indication information, or the like, the terminal device may calculate the quantity of repetitions by dividing the quantity of ports by the quantity of uplink data streams, and then rounding down. For example, when the quantity of indicated uplink data streams is 2, and the quantity of configured ports is 4, it may be calculated that the quantity of repetitions is 2. When the quantity of indicated uplink data streams is 3, and the quantity of configured ports is 8, it may be calculated that the quantity of repetitions is 2. The quantity of repetitions indicates a quantity of downlink reference signals corresponding to each uplink data stream. The terminal device may determine, based on a preset rule, the quantity of uplink data streams, and the quantity of repetitions, a plurality of downlink reference signals corresponding to each uplink data stream.

The preset rule may be understood as a relationship between different uplink data streams and ports, and is usually preconfigured in a network device and a terminal device. Taking four ports, two uplink data streams, and two repetitions as an example: if the uplink data streams are numbered as data streams # 1 and data streams # 2, then the preset rule may be "# 1, # 2, # 1, # 2" or "# 1, # 1, # 2, # 2". It should be understood that when three uplink data streams are repeated twice, the uplink data streams are numbered as data stream # 1, data stream # 2, and data stream # 3, then the preset rule "# 1, # 2, # 3, # 1, # 2, # 3" and the foregoing "# 1, # 2, # 1, # 2" are a same type of preset rule; and the preset rule "# 1, # 1, # 2, # 2, # 3, # 3" and the foregoing "# 1, # 1, # 2, # 2" are a same type of preset rule; and when two uplink data streams are repeated three times, the uplink data streams are numbered as data stream # 1 and data stream # 2, then the preset rule "# 1, # 2, # 1, # 2, # 1, # 2" and the foregoing "# 1, # 2, # 1, # 2" are a same type of preset rule; and the preset rule "# 1, # 1, # 1, # 2, # 2, # 2" and the foregoing "# 1, # 1, # 2, # 2" are a same type of preset rule. The foregoing preset rule is merely an example, and is not limited.

For ease of description, a preset rule of a type of "# 1, # 2, # 1, # 2" in which two uplink data streams are repeated twice is named as a first preset rule, and a preset rule of a type of "# 1, # 1, # 2, # 2" is named as a second preset rule. That is, the first preset rule is that the downlink reference signals of the "m" uplink data streams are sequentially arranged according to port numbers, and the downlink reference signals are repeated for "n" times, where "m" is a positive integer, and "n" is a positive integer greater than or equal to 2. The second preset rule is that each of the "a" uplink data streams is sequentially repeated "b" times according to the port number, where "a" is a positive integer, and "b" is a positive integer greater than or equal to 2.

It should be understood that the preset rule in the specific embodiment of this application is not limited to the first preset rule, the second preset rule, or an arrangement manner performed according to a specific rule. It also includes other arrangement manners. For example, in the case of four ports, two uplink data streams, and two repetitions, an arrangement manner such as "# 1, # 2, # 2, # 1" or "# 2, # 1, # 2, # 1" may also be used as a preset rule. When the quantity of repetitions is not fixed, for example, when there are four ports, three upstream data streams, and the data stream # 1 is repeated twice, then an arrangement manner such as "# 1, # 1, # 2, # 3", "# 2, # 1, # 1, # 3", or "# 2, # 3, # 1, # 1" may be used as a preset rule. In other words, different uplink data streams and ports may be arranged and combined correspondingly in any manner, and each manner may be included in the preset rule in embodiments of this application.

A preset rule is usually preconfigured in a network device and a terminal device. If there is only one type of preset rule preconfigured in the network device and the terminal device, the network device and the terminal device directly invoke the preset rule based on the preconfiguration information. In embodiments of this application, the network device sends the downlink reference signal of each of the at least one uplink data streams on the specified downlink reference signal resource according to the preset rule. Correspondingly, the terminal device determines, from the downlink reference signal resource according to the preconfigured preset rule, the downlink reference signal corresponding to each uplink data stream. If a plurality of preset rules are preconfigured, the network device sends a downlink reference signal of each of the at least one uplink data streams on a specified downlink reference signal resource according to one of the preset rules, and informs, via the indication information, the terminal device to determine, from the downlink reference signal resource according to the preset rule, the downlink reference signal corresponding to each uplink data stream.

Alternatively, the terminal device may determine the downlink reference signal resource based on the downlink control information.

For example, an ID related to the downlink reference signal, for example, an ID for channel state information (Channel state information, CSI) measurement and an ID for channel measurement resource configuration, may be indicated in the downlink control information, so that the terminal device, after receiving the downlink control information, may determine the resource of the to-be-received downlink reference signal by using the ID information included in the downlink control information. Alternatively, the downlink reference signal resource may be determined at a time-frequency resource location related to the downlink control information. For example, the downlink reference signal resource may be determined in a time slot in which the terminal device receives the downlink control information, or a time slot next to the time slot in which the terminal device receives the downlink control information, or a specified time slot. The downlink reference signal resource may be indicated by using the downlink control information. Further, the terminal device may determine, from the downlink reference signal resource, the downlink reference signal corresponding to the uplink data stream.

In addition, the terminal device may also determine the downlink reference signal resource by using another method. For example, but not limited to, the downlink reference signal resource may be a downlink reference signal resource preconfigured by using RRC signaling.

303. The terminal device determines, based on the quantity of repetitions, the quantity of uplink data streams, and the preset rule, a plurality of downlink reference signals corresponding to each of the at least one uplink data streams.

Specifically, the network device may determine, based on a quantity of uplink data streams, a preset rule, and a quantity of repetitions, a downlink reference signal port corresponding to each uplink data stream, and send, on the corresponding port, a downlink reference signal corresponding to a corresponding uplink data stream. Correspondingly, the terminal device may receive, on a corresponding port based on the quantity of repetitions, the quantity of uplink data streams, and the preset rule, the downlink reference signal associated with the corresponding uplink data stream. The quantity of repetitions indicates a quantity of downlink reference signals corresponding to each uplink data stream; the downlink reference signal corresponding to each uplink data stream is used to determine a precoding vector corresponding to the uplink data stream; and the precoding vector is used to precode the uplink data stream.

The specific preset rule may be the first preset rule or the second preset rule described above, or may be another preset rule that does not follow a specific law. When there are a plurality of uplink data streams, the preset rule may be that there is only one uplink data stream corresponding to a plurality of downlink reference signals. For example, among data stream # 1, data stream # 2, and data stream # 3, only data stream # 1 corresponds to two downlink reference signals. Alternatively, a plurality of uplink data streams may correspond to a plurality of downlink reference signals. For example, among data stream # 1, data stream # 2, and data stream # 3: data stream # 1 and data stream # 2 correspond to two downlink reference signals, and data stream # 3 corresponds to only one downlink reference signal. Alternatively, each uplink data stream may be corresponding to a plurality of downlink reference signals. For example, among data stream # 1, data stream # 2, and data stream # 3, each corresponds to two downlink reference signals. Alternatively, a plurality of uplink data streams may correspond to different quantities of downlink reference signals. For example, data stream # 1 may correspond to two downlink reference signals, and data stream # 2 may correspond to three downlink reference signals. The preset rule is used to determine a relationship between an uplink data stream and a downlink reference signal in combination with a quantity of uplink data streams.

In a process in which a network device sends a downlink reference signal to a terminal device, for example, two uplink data streams are configured, repeated two times, and the downlink reference signal is sent by using a first preset rule. In this case, the quantity of ports configured by the network device is 4. The network device sends beamformed CSI-RSs on the first CSI-RS port and the third CSI-RS port, so that an equivalent channel is obtained by performing channel estimation on a downlink reference signal received by the terminal device on the two ports; the equivalent channel may be used to determine an uplink precoding vector of the first uplink data stream. It should be understood that channels of the first CSI-RS port and the third CSI-RS port are different. Therefore, precoding vectors of beamformed CSI-RSs actually sent by the network device may be different. Similarly, the network device sends beamformed CSI-RSs on the second CSI-RS port and the fourth CSI-RS port, so that an equivalent channel is obtained by performing channel estimation on a downlink reference signal received by the terminal device on the two ports; the equivalent channel may be used to determine an uplink precoding vector of the second uplink data stream.

For example, three uplink data streams are configured, repeated for two times, and a downlink reference signal is sent by using a second preset rule. In this case, the quantity of ports configured by the network device is 8. The network device sends beamformed CSI-RSs on the first CSI-RS port and the second CSI-RS port, so that an equivalent channel is obtained by performing channel estimation on a downlink reference signal received by the terminal device on the two ports; the equivalent channel may be used to determine an uplink precoding vector of the first uplink data stream. Similarly, the network device sends beamformed CSI-RSs on the third CSI-RS port and the fourth CSI-RS port, so that an equivalent channel is obtained by performing channel estimation on a downlink reference signal received by the terminal device on the two ports; the equivalent channel may be used to determine an uplink precoding vector of the second uplink data stream. The beamformed CSI-RS is sent on the fifth CSI-RS port and the sixth CSI-RS port, so that an equivalent channel is obtained by performing channel estimation on a downlink reference signal received by the terminal device on the two ports; the equivalent channel may be used to determine the uplink precoding vector of the third uplink data stream. It should be understood that channels of different CSI-RS ports are different. Therefore, even if downlink reference signals of a same uplink data stream are sent, precoding vectors of beamformed CSI-RSs actually sent by the network device on different ports may be different.

In a process in which the terminal device receives the downlink reference signal sent by the network device, for example, the quantity of uplink data streams obtained by the terminal device is 2; the quantity of repetitions is 2, and downlink reference signal are sent by using the first preset rule. If the uplink data stream is numbered as data stream # 1 and data stream # 2, then it may be determined that the data stream # 1 is corresponding to the first port and the third port, and the data stream # 2 is corresponding to the second port and the fourth port. That is, the terminal device receives the downlink reference signal of the data stream # 1 on the first port and the third port, and receives the downlink reference signal of the data stream # 2 on the second port and the fourth port.

For another example, the quantity of uplink data streams obtained by the terminal device is 3; the quantity of repetitions is 2, and downlink reference signals are sent by using the second preset rule. If the uplink data stream is numbered as data stream # 1, data stream # 2, and data stream # 3, then it may be determined that the data stream # 1 is corresponding to the first port and the second port, the data stream # 2 is corresponding to the third port and the fourth port, and the data stream # 3 is corresponding to the fifth port and the sixth port. That is, the terminal device receives the downlink reference signal of the data stream # 1 on the first port and the second port, receives the downlink reference signal of the data stream # 2 on the third port and the fourth port, and receives the downlink reference signal of the data stream # 3 on the fifth port and the sixth port.

The terminal device determines, based on the quantity of uplink data streams, the preset rule, and the quantity of repetitions, the downlink reference signal corresponding to each of the plurality of uplink data streams. This enables the terminal device to determine the precoding vector corresponding to the uplink data stream based on the downlink reference signal, and precode the uplink data stream. In this case, when a signal-to-noise ratio of the downlink reference signal received by the terminal device is low, noise and interference between a plurality of downlink reference signals corresponding to each uplink data stream can be mutually offset to some extent by processing the plurality of downlink reference signals corresponding to each uplink data stream, thus improving the signal-to-noise ratio of the downlink reference signals received by the terminal device. This can further resolve the problem that the terminal device cannot obtain the uplink precoding vector corresponding to the uplink data stream because the terminal device cannot obtain required information through decoding, as the signal received by the terminal device is interfered by noise. This can improve the precision of the uplink precoding matrix and the robustness of uplink transmission.

The foregoing describes in detail the method for indicating an uplink precoding matrix provided in embodiments of this application, with reference to FIG. 2 and FIG. 3. The following describes in detail the communication apparatuses provided in embodiments of this application, with reference to FIG. 4 to FIG. 7.

FIG. 4 is a schematic block diagram of a precoding apparatus according to an embodiment of this application. As shown in the figure, a communication apparatus 400 may include a transceiver unit 401 and a determining unit 402. Alternatively, the communication apparatus 400 may further include a processing unit 403.

In a possible design, the communication apparatus 400 may be corresponding to the terminal device described in the foregoing method embodiment, for example, it may be a terminal device or a chip configured in a terminal device.

Specifically, the transceiver unit 401 may be configured to receive a plurality of precoded downlink reference signals, and the determining unit 402 may be configured to measure the plurality of downlink reference signals and determine an uplink precoding vector corresponding to an uplink data stream.

In an embodiment, the determining unit 402 is specifically configured to measure each of the plurality of downlink reference signals, and determine an uplink precoding vector corresponding to each downlink reference signal; and determine the uplink precoding vector according to the uplink precoding vectors corresponding to the plurality of downlink reference signals.

In another embodiment, the determining unit 402 is specifically configured to measure each downlink reference signal, and obtain an equivalent downlink channel matrix corresponding to each downlink reference signal; and determine, based on the equivalent downlink channel matrix corresponding to each downlink reference signal, an uplink precoding vector corresponding to each downlink reference signal.

In another embodiment, the uplink precoding vector corresponding to the downlink reference signal is equal to the equivalent downlink channel matrix or a normalized equivalent downlink channel matrix.

In another embodiment, the uplink precoding vector corresponding to the uplink data stream is an average value of uplink precoding vectors corresponding to the plurality of downlink reference signals, or the uplink precoding vector corresponding to the uplink data stream is a sum of downlink precoding vectors corresponding to the plurality of downlink reference signals.

In another embodiment, the apparatus further includes the processing unit 403, configured to precode the uplink data stream based on the uplink precoding vector.

In another embodiment, the processing unit 403 is specifically configured to process the uplink precoding vector, and precode the uplink data stream based on the processed uplink precoding vector.

In another embodiment, the processing unit 403 is specifically configured to precode the uplink data stream by using the uplink precoding vector.

In another embodiment, each of the plurality of downlink reference signals is precoded by using one downlink precoding vector, and the downlink precoding vector is determined by measuring an uplink reference signal.

In another possible design, the communication apparatus 400 may be corresponding to the terminal device in the foregoing method embodiment. For example, it may be a terminal device or a chip configured in the terminal device.

Specifically, the transceiver unit 401 is configured to receive downlink control information, where the downlink control information indicates a quantity of repetitions and a quantity of uplink data streams, and the quantity of repetitions indicates a quantity of downlink reference signals corresponding to each uplink data stream. The downlink reference signal corresponding to each uplink data stream is used to determine a precoding vector corresponding to the uplink data stream, and the precoding vector is used to precode the uplink data stream.

The determining unit 402 is configured to determine, from the downlink reference signal resource based on the repetition quantity, the quantity of uplink data streams, and a preset rule, a plurality of downlink reference signals corresponding to each of the at least one uplink data streams.

FIG. 5 is a schematic block diagram of another precoding apparatus according to an embodiment of this application. As shown in the figure, a communication apparatus 500 may include a processing unit 501 and a transceiver unit 502.

In a possible design, the communication apparatus 500 may be corresponding to the network device in the foregoing method embodiment.

Specifically, the processing unit 501 is configured to precode a plurality of downlink reference signals. The transceiver unit 502 is configured to send the plurality of precoded downlink reference signals, where measurement results of the plurality of precoded downlink reference signals are used to determine an uplink precoding vector corresponding to an uplink data stream.

In an embodiment, the uplink precoding vector is determined based on uplink precoding vectors corresponding to the plurality of downlink reference signals, and each uplink precoding vector is determined by measuring each of the plurality of downlink reference signals.

In another embodiment, the uplink precoding vector corresponding to each downlink reference signal is determined based on an equivalent downlink channel matrix corresponding to each downlink reference signal, and the equivalent downlink channel matrix corresponding to each downlink reference signal is obtained by measuring each downlink reference signal.

In another embodiment, the uplink precoding vector corresponding to the downlink reference signal is equal to the equivalent downlink channel matrix or a normalized equivalent downlink channel matrix.

In another embodiment, the uplink precoding vector corresponding to the uplink data stream is an average value of uplink precoding vectors corresponding to the plurality of downlink reference signals, or the uplink precoding vector corresponding to the uplink data stream is a sum of downlink precoding vectors corresponding to the plurality of downlink reference signals.

In another possible design, the communication apparatus 500 may be corresponding to the network device in the foregoing method embodiment.

Specifically, the processing unit 501 is configured to generate downlink control information, where the downlink control information indicates a quantity of repetitions and a quantity of uplink data streams, and the quantity of repetitions indicates a quantity of downlink reference signals corresponding to each uplink data stream. The downlink reference signal corresponding to each uplink data stream is used to determine a precoding vector corresponding to the uplink data stream, the precoding vector is used to precode the uplink data stream, and the downlink reference signal corresponding to each uplink data stream is determined based on the quantity of repetitions, the quantity of uplink data streams, and a preset rule.

The transceiver unit 502 is configured to send the downlink control information.

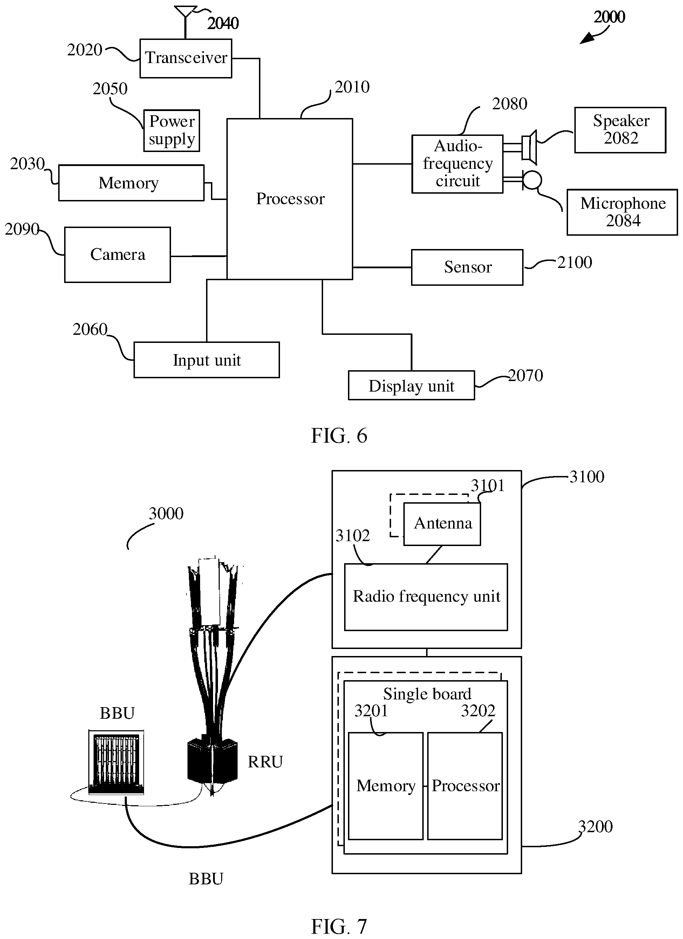

FIG. 6 is a schematic structural diagram of a terminal device according to an embodiment of this application. The terminal device 2000 may be used in the system shown in FIG. 1, to perform functions of the terminal device in the foregoing method embodiments. As shown in FIG. 6, the terminal device 2000 includes a processor 2010 and a transceiver 2020. Alternatively, the terminal device 2000 further includes a memory 2030. The processor 2010, the transceiver 2002, and the memory 2030 may communicate with each other via an internal connection path, and transmit a control signal and/or a data signal. The memory 2030 is configured to store a computer program. The processor 2010 is configured to invoke and run the computer program from the memory 2030, to control the transceiver 2020 to receive and transmit signals. Alternatively, the terminal device 2000 may further include an antenna 2040, configured to send, by using a radio signal, uplink data or uplink control signaling that is output by the transceiver 2020.

The processor 2010 and the memory 2030 may form a processing apparatus, where the processor 2010 is configured to execute program code stored in the memory 2030 to implement the foregoing functions. During specific implementation, the memory 2030 may alternatively be integrated into the processor 2010, or may be independent of the processor 2010. The processor 2010 may be corresponding to the processing unit 403 and/or the determining unit 402 in FIG. 4.

The transceiver 2020 may correspond to the transceiver unit 401 in FIG. 4, and may also be referred to as a communication unit. The transceiver 2020 may include a receiver (or referred to as a receiver machine or a receiver circuit), and a transmitter (or referred to as a transmitter machine or a transmitter circuit). The receiver is configured to receive a signal, and the transmitter is configured to transmit a signal.

It should be understood that the terminal device 2000 shown in FIG. 6 can implement processes related to the terminal device in the method embodiments shown in FIG. 2 to FIG. 3. The operations and/or the functions of the modules in the terminal device 2000 are intended to implement corresponding procedures in the foregoing method embodiments. For details, refer to descriptions in the foregoing method embodiments. To avoid repetition, detailed descriptions are appropriately omitted herein.

The processor 2010 may be configured to perform an action that is implemented inside the terminal device and that is described in the foregoing method embodiments. The transceiver 2020 may be configured to perform a sending action by the terminal device to the network device or a receiving operation from the network device in the foregoing method embodiments. For details, refer to the description in the foregoing method embodiment, and details are not described herein again.

Alternatively, the terminal device 2000 may further include a power supply 2050, configured to supply power to various components or circuits in the terminal device.

In addition, to further improve the functions of the terminal device, the terminal device 2000 may further include one or more of an input unit 2060, a display unit 2070, an audio circuit 2080, a camera 2090, and a sensor 2100. The audio circuit may further include a speaker 2082, and a microphone 2084.

FIG. 7 is a schematic structural diagram of a network device according to an embodiment of this application. For example, FIG. 7 may be a schematic structural diagram of a base station. The base station 3000 may be used in the system shown in FIG. 1, to perform functions of the network device in the foregoing method embodiment.

As shown in the figure, the base station 3000 may include one or more radio frequency units, such as a remote radio unit (Remote radio unit, RRU) 3100 and one or more baseband units (Baseband unit, BBU), also referred to as a digital unit, (Digital unit, DU) 3200. The RRU 3100 may be referred to as a transceiver unit, and corresponds to the transceiver unit 502 in FIG. 5. Alternatively, the transceiver unit 3100 may also be referred to as a transceiver machine, a transceiver circuit, or a transceiver, and may include at least an antenna 3101 and a radio frequency unit 3102. Alternatively, the transceiver unit 3100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 3100 part is mainly configured to receive and send a radio frequency signal and convert a radio frequency signal and a baseband signal, for example, to send indication information to a terminal device. The BBU 3200 is mainly configured to perform baseband processing, and control a base station. The RRU 3100 and the BBU 3200 may be physically disposed together, or may be physically disposed separately, that is, a distributed base station.

The BBU 3200 is a control center of the base station, or referred to as a processing unit. It may correspond to the processing unit 501 in FIG. 5. It is mainly configured to complete a baseband processing function, such as channel coding, multiplexing, modulation, and spreading. For example, the BBU (processing unit) may be configured to control the base station to perform an operation procedure of the network device described in the foregoing method embodiment, for example, to generate the foregoing indication information.

In an example, the BBU 3200 may consist of one or more boards. The multiple boards may jointly support a radio access network (such as an LTE network) of a single access standard, or may separately support radio access networks of different access standards (such as LTE, 5G, or other networks). The BBU 3200 further includes a memory 3201 and a processor 3202. The memory 3201 is configured to store necessary instructions and data. The processor 3202 is configured to control the base station to perform a necessary action, for example, to control the base station to perform an operation procedure related to the network device in the foregoing method embodiments. The memory 3201 and the processor 3202 may serve one or more boards. That is, a memory and a processor may be separately disposed on each board. Alternatively, multiple boards may share a same memory and a same processor. In addition, necessary circuits may be arranged on each board.

It should be understood that the base station 3000 shown in FIG. 7 can implement processes related to the network device described in the method embodiments in FIG. 2 to FIG. 3. Operations and/or functions of the modules in the base station 3000 are respectively used to implement corresponding procedures in the foregoing method embodiments. For details, refer to descriptions in the foregoing method embodiments. To avoid repetition, detailed descriptions are appropriately omitted herein.

The BBU 3200 may be configured to perform an action that is internally implemented by the network device and that is described in the foregoing method embodiment, and the RRU 3100 may be configured to perform an action that is sent by the network device to the terminal device or received from the terminal device and that is described in the foregoing method embodiment. For details, refer to the description in the foregoing method embodiment, and details are not described herein again.

An embodiment of this application further provides a processing apparatus, including a processor and an interface. The processor is configured to perform the communication method in any one of the foregoing method embodiments.

It should be understood that the foregoing processing apparatus may be a chip. For example, the processing apparatus may be a field programmable gate array (Field programmable gate array, FPGA), an application-specific integrated chip (Application-specific integrated circuit, ASIC), a system on chip (system on chip, SoC), a central processing unit (Central processing unit, CPU), a network processor (Network processor, NP), a digital signal processing (Digital signal processing, DSP) circuit, a micro controller unit (Micro controller unit, MCU), a programmable controller (Programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by a combination of hardware in the processor and a software module. A software module may be deployed in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be completed by using an integrated logic circuit of hardware in the processor or an instruction in a form of software. The processor may be a general purpose processor, a digital signal processor (Digital signal processor, DSP), an application-specific integrated circuit (Application-specific integrated circuit, ASIC), a field programmable gate array (Field programmable gate array, FPGA) or another programmable logic device, a discrete gate or a transistor logic device, or a discrete hardware component. It may implement or perform the methods, the steps, and logical block diagrams that are disclosed in embodiments of this application. A general purpose processor may be a microprocessor, or any conventional processor. Steps of the methods disclosed with reference to embodiments of this application, may be directly executed and accomplished through a hardware decoding processor, or may be executed and accomplished by using a combination of hardware and software modules in the decoding processor. A software module may be deployed in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (Read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM) that is used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double data rate SDRAM, DDR SDRAM), an enhanced synchronous dynamic random access memory (Enhanced SDRAM, ESDRAM), a synchronous link dynamic random access memory (Synchlink DRAM, SLDRAM), or a direct rambus random access memory (Direct rambus RAM, DR RAM). It should be noted that the memories of the systems and methods described herein are intended to include, but are not limited to, these and any other suitable types of memories.

According to the method provided in embodiments of this application, this application further provides a computer program product, where the computer program product includes: computer program code. When the computer program code runs on a computer, the computer is enabled to perform the method in any one of the embodiments shown in FIG. 2 to FIG. 3.

Based on the methods provided in embodiments of this application, this application further provides a computer-readable storage medium. The computer-readable medium stores program code. When the program code is run on a computer, the computer is enabled to perform the method in any one of embodiments shown in FIG. 2 to FIG. 3.

According to the methods provided in embodiments of this application, this application further provides a system. The system includes the foregoing one or more terminal devices and the foregoing one or more access devices.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application, are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (Digital video disc, DVD)), a semiconductor medium (for example, or a solid-state disk (Solid-state disk, SSD)).

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, reference may be made to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, for example, a USB flash drive, a removable hard disk, a read-only memory (Read-only memory, ROM), a random access memory (Random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A precoding method, comprising:
receiving a plurality of precoded downlink reference signals; and
measuring the plurality of downlink reference signals and determining an uplink precoding vector corresponding to an uplink data stream.

2. The method according to claim 1, wherein the measuring the plurality of downlink reference signals and determining an uplink precoding vector corresponding to an uplink data stream specifically comprises:
measuring each of the plurality of downlink reference signals and determining an uplink precoding vector corresponding to each downlink reference signal; and
determining the uplink precoding vector based on the uplink precoding vectors corresponding to the plurality of downlink reference signals.

3. The method according to claim 2, wherein the measuring each of the plurality of downlink reference signals and determining an uplink precoding vector corresponding to each downlink reference signal specifically comprises:
measuring each downlink reference signal, and obtaining an equivalent downlink channel matrix corresponding to each downlink reference signal; and
determining, based on the equivalent downlink channel matrix corresponding to each downlink reference signal, the uplink precoding vector corresponding to each downlink reference signal.

4. The method according to claim 3, wherein the uplink precoding vector corresponding to the downlink reference signal is equal to the equivalent downlink channel matrix or a normalized equivalent downlink channel matrix.

5. The method according to claim 2, wherein the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

6. The method according to claim 1, wherein the method further comprises:
precoding the uplink data stream based on the uplink precoding vector.

7. The method according to claim 6, wherein the precoding the uplink data stream based on the uplink precoding vector specifically comprises:
processing the uplink precoding vector; and
precoding the uplink data stream based on the processed uplink precoding vector.

8. The method according to claim 6, wherein the precoding the uplink data stream based on the uplink precoding vector specifically comprises:
precoding the uplink data stream by using the uplink precoding vector.

9. The method according to claim 1, wherein each of the plurality of downlink reference signals is precoded by using one downlink precoding vector, and the downlink precoding vector is determined by measuring an uplink reference signal.

10. A precoding method, comprising:
receiving downlink control information, wherein the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine a precoding vector corresponding to the uplink data stream, and the precoding vector is used to precode the uplink data stream; and
determining, based on the quantity of repetitions, the quantity of uplink data streams, and a preset rule, a plurality of downlink reference signals corresponding to each of at least one uplink data stream.

11. A precoding method, comprising:
precoding a plurality of downlink reference signals; and
sending the plurality of precoded downlink reference signals, wherein measurement results of the plurality of precoded downlink reference signals are used to determine an uplink precoding vector corresponding to an uplink data stream.

12. The method according to claim 11, wherein the uplink precoding vector is determined based on uplink precoding vectors corresponding to the plurality of downlink reference signals, and each uplink precoding vector is determined by measuring each of the plurality of downlink reference signals.

13. The method according to claim 12, wherein the uplink precoding vector corresponding to each downlink reference signal is determined based on an equivalent downlink channel matrix corresponding to each downlink reference signal, and the equivalent downlink channel matrix corresponding to each downlink reference signal is obtained by measuring each downlink reference signal.

14. The method according to claim 13, wherein the uplink precoding vector corresponding to the downlink reference signal is equal to the equivalent downlink channel matrix or a normalized equivalent downlink channel matrix.

15. The method according to claim 12, wherein the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

16. A precoding method, comprising:
generating downlink control information, wherein the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine a precoding vector corresponding to the uplink data stream, the precoding vector is used to precode the uplink data stream, and the downlink reference signal corresponding to each uplink data stream is determined based on the quantity of repetitions, the quantity of uplink data streams, and a preset rule; and
sending the downlink control information.

17. A precoding apparatus, comprising:
a transceiver unit, configured to receive a plurality of precoded downlink reference signals; and
a determining unit, configured to measure the plurality of downlink reference signals and determine an uplink precoding vector corresponding to an uplink data stream.

18. The apparatus according to claim 17, wherein that the determining unit is configured to measure the plurality of downlink reference signals and determine an uplink precoding vector corresponding to an uplink data stream specifically comprises:
the determining unit is configured to measure each of the plurality of downlink reference signals, and determine an uplink precoding vector corresponding to each downlink reference signal; and determine the uplink precoding vector based on the uplink precoding vectors corresponding to the plurality of downlink reference signals.

19. The apparatus according to claim 18, wherein that the determining unit is configured to measure each of the plurality of downlink reference signals and determine an uplink precoding vector corresponding to each downlink reference signal specifically comprises:
the determining unit is configured to measure each downlink reference signal and obtain an equivalent downlink channel matrix corresponding to each downlink reference signal; and determine, based on the equivalent downlink channel matrix corresponding to each downlink reference signal, the uplink precoding vector corresponding to each downlink reference signal.

20. The apparatus according to claim 19, wherein the uplink precoding vector corresponding to the downlink reference signal is equal to the equivalent downlink channel matrix or a normalized equivalent downlink channel matrix.

21. The apparatus according to claim 18, wherein the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

22. The apparatus according to claim 17, wherein the apparatus further comprises:
a processing unit, configured to precode the uplink data stream based on the uplink precoding vector.

23. The apparatus according to claim 22, wherein that the processing unit is configured to precode the uplink data stream based on the uplink precoding vector specifically comprises:
the processing unit is configured to process the uplink precoding vector, and precode the uplink data stream based on the processed uplink precoding vector.

24. The apparatus according to claim 22, wherein that the processing unit is configured to precode the uplink data stream based on the uplink precoding vector specifically comprises:
the processing unit is configured to precode the uplink data stream by using the uplink precoding vector.

25. The apparatus according to claim 17, wherein each of the plurality of downlink reference signals is precoded by using one downlink precoding vector, and the downlink precoding vector is determined by measuring an uplink reference signal.

26. A precoding apparatus, comprising:
a transceiver unit, configured to receive downlink control information, wherein the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine a precoding vector corresponding to the uplink data stream, and the precoding vector is used to precode the uplink data stream; and
a determining unit, configured to determine, based on the quantity of repetitions, the quantity of uplink data streams, and a preset rule, a plurality of downlink reference signals corresponding to each of at least one uplink data stream.

27. A precoding apparatus, comprising:
a processing unit, wherein the processing unit is configured to precode a plurality of downlink reference signals; and
a transceiver unit, configured to send the plurality of precoded downlink reference signals, wherein measurement results of the plurality of precoded downlink reference signals are used to determine an uplink precoding vector corresponding to an uplink data stream.

28. The apparatus according to claim 27, wherein the uplink precoding vector is determined based on uplink precoding vectors corresponding to the plurality of downlink reference signals, and each uplink precoding vector is determined by measuring each of the plurality of downlink reference signals.

29. The apparatus according to claim 28, wherein the uplink precoding vector corresponding to each downlink reference signal is determined based on an equivalent downlink channel matrix corresponding to each downlink reference signal, and the equivalent downlink channel matrix corresponding to each downlink reference signal is obtained by measuring each downlink reference signal.

30. The apparatus according to claim 29, wherein the uplink precoding vector corresponding to the downlink reference signal is equal to the equivalent downlink channel matrix or a normalized equivalent downlink channel matrix.

31. The apparatus according to claim 28, wherein the uplink precoding vector corresponding to the uplink data stream is an average of uplink precoding vectors corresponding to the plurality of downlink reference signals, or the uplink precoding vector corresponding to the uplink data stream is a sum of downlink precoding vectors corresponding to the plurality of downlink reference signals.

32. A precoding apparatus, comprising:
a processing unit, configured to generate downlink control information, wherein the downlink control information indicates a quantity of repetitions and a quantity of uplink data streams, the quantity of repetitions indicates a quantity of downlink reference signals corresponding to each uplink data stream, the downlink reference signal corresponding to each uplink data stream is used to determine a precoding vector corresponding to the uplink data stream, the precoding vector is used to precode the uplink data stream, and the downlink reference signal corresponding to each uplink data stream is determined based on the quantity of repetitions, the quantity of uplink data streams, and a preset rule; and
a transceiver unit, configured to send the downlink control information.

33. A communication apparatus, comprising:
a memory, wherein the memory is configured to store computer programs; and
a processor, configured to execute some or all of the computer programs stored in the memory, so that the device performs the method according to any one of claims 1 to 10, or performs the method according to any one of claims 11 to 16.

34. A computer-readable storage medium, comprising computer programs, wherein when some or all of the computer programs are run on a computer, the computer is enabled to perform the method according to any one of claims 1 to 10, or performs the method according to any one of claims 11 to 16.
